# EUROPEAN PATENT SPECIFICATION

(11) **EP 0 334 650 B1**
(45) Date of publication and mention of the grant of the patent: **07.12.1994**
(21) Application number: 89302895.1
(22) Date of filing: 23.03.1989
(51) Int. Cl.: G11B 21/16, G11B 5/60

(54) **Low profile head-load beam slider arm for disk drive**
Einen Kleinprofilkopf tragender Schlittenarm für einen Plattenantrieb
Bras support de patin portant une tête à profil compact pour entraînement de disques

(30) Priority: 23.03.1988 US 172190
(43) Date of publication of application: 27.09.1989
(73) Proprietor: QUANTUM CORPORATION, Milpitas California 95035 (US)
(72) Inventor: Hinlein, Sigmund, Sudbury Massachusetts 01776 (US)
(74) Representative: Goodman, Christopher

(56) References cited:
- EP-A- 0 033 680
- EP-A- 0 302 615
- US-A- 4 792 875
- IBM TECHNICAL DISCLOSURE BULLETIN. vol. 26, no. 2, July 1983, NEW YORK US pages846 - 849; MAY: "TWO-STAGE DISK FILE ACTUATOR"

## Description

### Background of the Invention

This invention relates to load beam slider arms for carrying heads in a disk drive, such as a disk reader or servowriter.

As is known, in a disk drive a head, such as a magnetic head, for reading data from or writing mapping information onto the disk is typically mounted at one end of a load beam slider arm. The other end of the load beam slider arm is secured to an actuator arm, which is in turn coupled to the drive shaft of a motor, such as a servo or stepping motor. The head is moved to a selected track on the disk by the motor via the actuator and load beam slider arms.

A conventional load beam slider arm comprises a thin, resilient metal blade (such as that described in EP- 0033680.). In conventional arms, the head is attached by a gimbal mechanism to a slider, which is in turn secured, for example by epoxy, to a planar surface of the blade's distal end. The blade resiliently urges the head against the surface of the disk when the disk is at rest. As the disk rotates, a stream of air passing between the slider and disk lifts the head sufficiently to space the head from the disk surface. To stiffen the blade and provide added resiliency, the sides of the blade typically are each angularly disposed with respect to the planar surfaces of the blade in the opposite direction from the planar surface on which the head is disposed. For example, the sides are bent towards the lower surface (i.e., downward) of a blade having the head disposed on the upper surface thereof. Such an arrangement is disclosed in IBM Technical Disclosure Bulletin Vol 26, No. 2, July 1983, pages 846-849: "Two-Stage Disk File Actuator". Thus, the height (i.e., profile) of the load beam slider arm extends from the edges of the downward-folded sides to the upper surface of the head, typically about 1.89 mm (0.0745 inches). Also, because the sides are bent away from the head, the region of the load beam slider arm which carries the head is typically fairly narrow, often narrower (for example, 1.91 mm (0.075 inches)) than the width of the head itself.

In multiple disk drives, a pair of such slider arms are disposed back-to-back between a pair of disks, one head communicating with the lower surface of the upper disk, and the other head with the upper surface of the lower disk. The disks must be spaced sufficiently (for example, by 5.1 mm (0.2 inches)) to make room for both load beam slider arms.

EP-A-0 302 615 is cited in virtue of Art.54(3) EPC and concerns a transducer assembly for a magnetic record disk store the arm of which is constructed similarly to the arm according to the invention but in EP-A-0 302 615 these is disposed a gimbal spring between the arm and the slider.

### Summary of the Invention

The invention as defined in claim 1 reduces the profile (i.e., height) of the arm while maintaining the same degree of stiffness, thereby allowing disks in a multiple disk drive to be spaced closer together. Thus, the size of the disk drive is reduced, or, alternatively, more disks can be placed in a disk drive of a predetermined size.

Preferred embodiments include the following features. The first member comprises a blade including the surface, and the second member comprises a wall integrally formed with the blade and disposed at an angle of approximately 90° with respect to the surface. A portion of the second member is adapted to restrain an electrical lead of the head against the second member, and a portion of the second member may also be adapted to be engaged for mounting and demounting the arm in the disk drive. The second member includes a tab forming a channel with the second member for receiving the electrical lead, the tab having at least one surface adapted to be engaged for mounting and demounting the arm in the disk drive. A base is proximally disposed with respect to the first member for mounting the arm on an actuator in a disk drive, the base preferably being integrally formed with the first and second members. The base also includes a tab forming a channel for receiving the electrical lead. Preferably, the first and second members are integrally formed.

In one aspect of the invention, an arm for mounting a head in a disk drive comprises an end region adapted to carry the head on a mounting surface and a pair of side regions angularly disposed with respect to the mounting surface to straddle the head. Thus, the pair of side regions and mounting surface form a channel for receiving the head. This arrangement stiffens the arm while also inhibiting twisting of the arm about its longitudinal axis.

Preferred embodiments include the following features. The end region comprises a blade including the mounting surface, the head being adapted to be disposed on a gimbal on the mounting surface, the pair of side regions each comprising a wall, with the head being disposed adjacent at least a portion of each wall. The wall portions are spaced sufficiently to allow the head to move on said gimbal without contacting either wall portion. The wall portions are preferably integrally formed with the blade. A portion of at least one of the side regions is adapted to restrain an electrical lead of the head against the side region. A portion of at least one side region is adapted to be engaged for mounting and demounting the arm in the disk drive.

Another aspect of the invention features a disk drive comprising at least one disk, a head for communicating with the disk, and an arm for mounting the head in the disk drive, the arm comprising an end region adapted to carry the head on a mounting surface thereof, and a pair of side regions longitudinally disposed along the arm, the side regions being angularly disposed with respect to the mounting surface to form a channel with the mounting surface within which the head is disposed.

Preferred embodiments include the following features. The disk drive includes a pair of spaced disks, and a pair of the arms are mounted back-to-back in the disk drive, with the head carried by the first arm communicating with a surface of the first disk and the head carried by the second arm communicating with a surface of the second disk. The reduced profile (i.e., height) of the arm allows the disks to be spaced by a reduced amount. Thus, the size of the disk drive is reduced, or alternately, more disks can be placed in a disk drive of predetermined size.

In other embodiments, the head is disposed on a gimbal on the mounting surface, the mounting surface having a width in the channel selected to stiffen the arm in a direction perpendicular to a longitudinal axis of the arm and to allow the head to move on the gimbal without contacting the pair of side regions. The arm includes a base region, proximally disposed with respect to the end region and a pair of side regions, for mounting the arm on an actuator. The actuator has a longitudinal axis, and the base region and actuator comprise means for aligning the arm and head laterally along the actuator's longitudinal axis. The base region and actuator also include means for aligning the arm and head axially with respect to the actuator's longitudinal axis. The base region, end region, and side regions are preferably integrally formed.

Other feature and advantages of the invention will be apparent from the following description, and from the claims.

### Description of the Preferred Embodiment Drawings

We first briefly describe the drawings.

Fig. 1 is an exploded perspective view of the head mounting assembly of the invention.

Fig. 2 is a plan view of the underside of a load beam slider arm and actuator arm of the head mounting assembly of Fig. 1.

Fig. 3 is a side view of the load beam slider arm and actuator arm of Fig. 2 taken along line 3-3, and also of components of a clamp for securing the arms together.

Fig. 4 is a front view of the load beam slider arm of Fig. 3 taken along line 4-4.

Fig. 5 is a plan view of a metal sheet pattern useful in understanding the fabrication of the load beam slider arm of Figs. 1-4.

Fig. 6 is an exploded cross-sectional view of the load beam slider arm and actuator arm of Fig. 2 taken along line 6-6, and also of the components of the clamp of Fig. 3.

Fig. 7 is a cross-sectional view of the head mounting assembly of Fig. 6 fully assembled.

Fig. 8 is a top view of a tool useful in assembling the head mounting assembly of Figs. 1-7.

Fig. 9 is a cross-sectional view of the tool of Fig. 8 taken along line 9-9.

Fig. 10 is a side view of a multiple disk drive including a number of head mounting assemblies in accordance with Figs. 1-7.

Fig. 11 is a plan view of the underside of a load beam slider arm and actuator arm according to another embodiment of the head mounting assembly of the invention.

Fig. 12 is a side view of the load beam slider arm and actuator arm of Fig. 11 taken along line 12-12.

### Structure and Operation

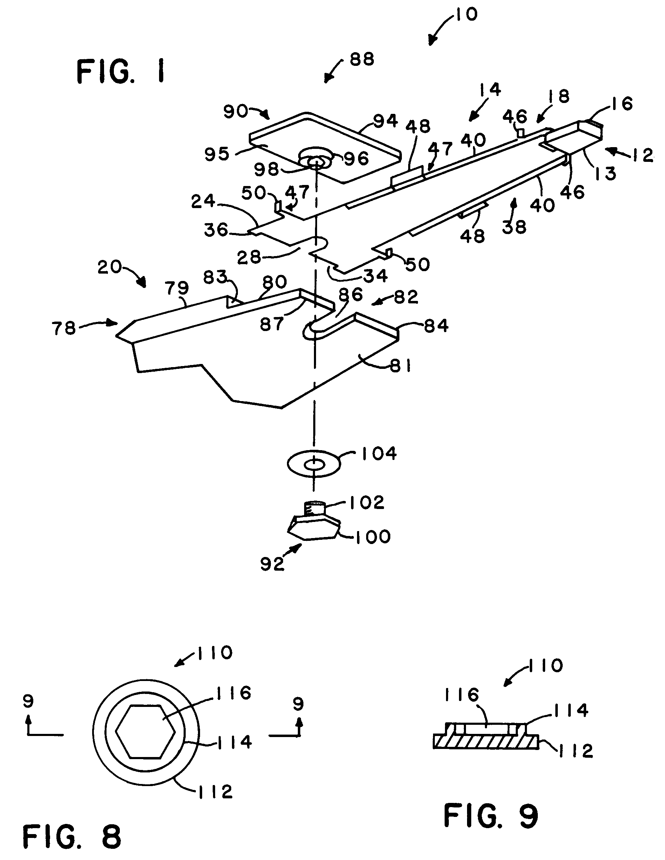

Referring to Figs. 1-3, mounting assembly 10 for mounting magnetic head 12 within a disk drive (such as a disk reader or servowriter) comprises detachable load beam slider arm 14 for carrying and supporting magnetic head 12, which is in turn secured to slider 16 by gimbal mechanism 17. Magnetic head 12 is any suitable head for communicating with a magnetic disk (not shown) in a conventional manner, such as by writing mapping information onto the disk (as in a servowriter) or reading data from the disk (as in a disk reader). Slider 16 is fastened, for example, by epoxy, to distal end 18 of load beam slider arm 14. Actuator arm 20 supports and moves load beam slider arm 14 and head 12 among selected tracks on the magnetic disk in response to an actuator mechanism, such as a motor (not shown), for example, a servomotor or stepping motor.

Load beam slider arm 14 is a resilient metal (such as stainless steel) blade which is relatively thin (for example, 76 micrometers (0.003 inches)) to reduce its mass and allow a stream of air which passes between slider 16 and the disk during disk rotation to lift head 12 sufficiently to space underside 13 of head 12 from the disk surface. This protects head 12 from being damaged by the rapidly rotating (e.g., at 3000 rpm) disk during operation. Head 12 is disposed on lower surface 18b of distal end 18, Proximal end 22 of slider arm 14 forms base 24 disposed at a slight angle (for example, 1.5° to 2°) with respect to distal end 18 through bend region 26. This serves to "preload" head 12 into contact with the disk surface when the disk is at rest. Base 24 and bend region 26 are integrally formed with distal end 18 from a single piece of metal; thus, base 24 and bend region 26 are each also about 76 micrometers (0.003 inches) thick. Load beam slider arm 14 has a total length of about 29.2 mm (1.15 inches).

Base 24 is approximately 5.1 mm (0.2 inches) in length and 10.2 mm (0.4 inches) wide. Mounting and alignment slot 28, approximately 2.5 mm (0.1 inches) wide, is disposed in base 24 laterally centered about longitudinal axis 30 of load beam slider arm 14. Slot 28 is approximately as long as base 24 and opens at proximal surface 32 thereof. A pair of shallower slots 34 are recessed from proximal surface 32 to form a pair of fingers 36, each about 1/8 of the width of base 24, at each side of base 24 for purposes discussed in detail below.

To stiffen load beam slider arm 14 and enable tt to maintain its resiliency during repeated use in the disk drive (i.e., to prevent distal end 18 from being permanently bent away from the disk surface by the stream of air), a pair of stiffeners 38 are disposed longitudinally along distal end 18 between base 24 and the tip of distal end 18. Stiffeners 38 additionally inhibit twisting of load beam slider arm 14 about longitudinal axis 30. Stiffeners 38 preferably comprise a pair of side walls 40 integrally formed with the remainder of distal end 18. Side walls 40 are disposed at an angle (i.e., bent) with respect to upper and lower planar surfaces 18a, 18b, respectively, of distal end 18 . More specifically, side walls 40 are bent downward (i.e., away from upper surface 18a and towards lower surface 18b) to be disposed on the same side of (i.e., beneath) distal end 18 as head 12. Stated alternately, side walls 40 make an angle of less than 180°, preferably approximately 90°, with lower surface 18b, while making an angle of greater than 180°, preferably about 270°, with upper surface 18a. This is the reverse of the slider arm described in the Background of the Invention section above, in which the sides are bent in the opposite direction with respect to the surface of the slider arm on which the head is disposed.

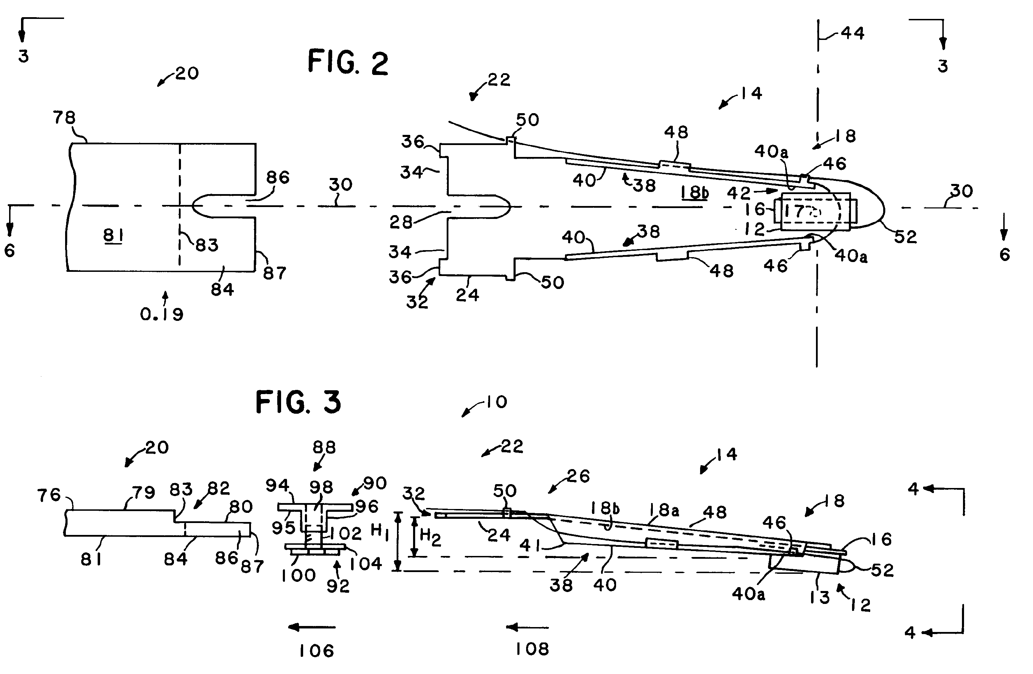

With this arrangement, head 12 and side walls 40 are positioned on the same side of lower surface 18b. The total height (i.e., the profile) H₁ (Fig. 3) of load beam slider arm 14 (including head 12) is reduced to approximately 1.13 mm (0.0445 inches). The profile of load beam slider arm 14 itself below lower surface 18b (H₂) is only about 0.90 mm (0.0355 inches). As discussed in detail below, the reduced profile of slider arm 14 permits the spacing between disks in a multiple disk drive to be concomitantly reduced.

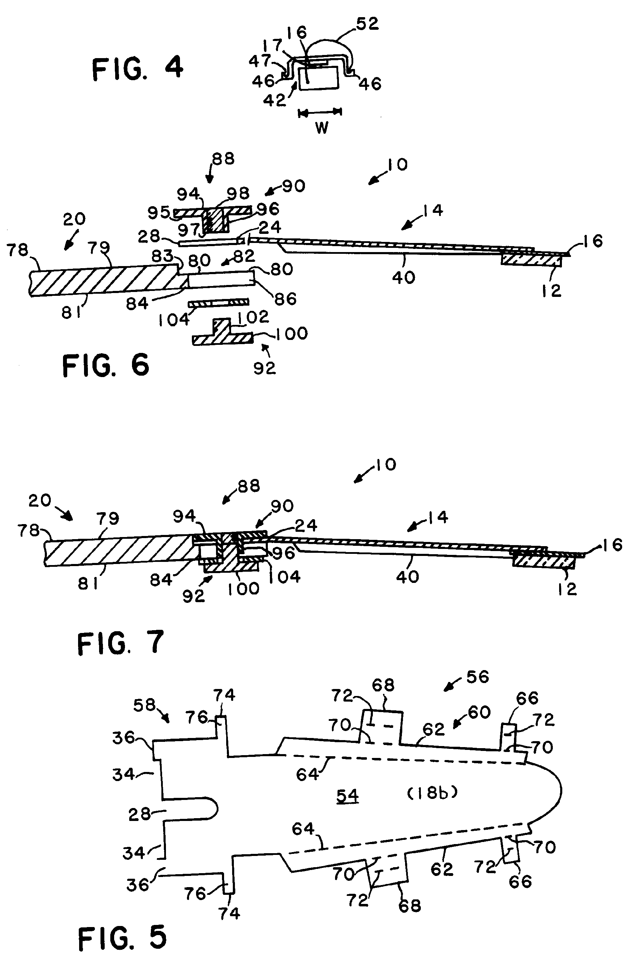

Referring also to Fig. 4, distal portions 40a of side walls 40 straddle magnetic head 12, forming channel 42 with lower surface 18b within which head 12 is disposed. Thus, the minimum width, W, between distal side wall portions 40a is large enough (for example, 3.81 mm (0.15 inches)) to not only provide room for head 12 between side wall portions 40a but to also allow head 12 to move on gimbal 17 without contacting either distal side wall portion 40a, This increased width within channel 42 (i.e.. in the region in which receives head 12) increases the stiffness of distal end 18 with respect to axis 44 perpendicular to longitudinal axis 30. Thus, the positional stability of head 12 on longitudinal axis 30 is increased. This is especially important when load beam slider arm 14 is used with a rotary actuator in a "seek mode", in which actuator arm 20 rapidly pivots load beam slider arm 14 and head 12 along a tangental arc with respect to axis 44.

A pair of tabs 46, 48 are disposed on each side wall 40, and a pair of similar tabs 50 are disposed on the sides of base 24. As shown in Fig. 1 and 3, tabs 46, 48 form "U"-shaped channels 47 with the outer surfaces of side walls 40. Tabs 46, 48 provide restraints in channels 47 for electrical lead 52 connected to head 12 from circuitry in the disk drive. Electrical lead 52 is restrained against one of the side walls 40 simply by bending tabs 46, 48 of that side wall toward the wall with any suitable tool with lead 52 disposed in channels 47. Moreover, tabs 48, which are wider than tabs 46, provide a pair of "handles" for engagement by a slider arm mounting tool (not shown). This facilitates insertion and removal of load beam slider arm 14 on actuator arm 20 (in a manner described in detail below) while maintaining the mounting tool away from head 12 to avoid possible damage thereof by the mounting tool.

Referring also to Fig. 5, load beam slider arm 14 is fabricated by etching or stamping sheet 54 of stainless steel in pattern 56. Proximal end 58 of metal sheet 54 is stamped in the shape of base 24 and includes slots 28, 34. Distal end 60 includes a pair of flared edges 62 which are spaced from line 64 by an amount corresponding to the height of each side wall 40. Such spacing varies from a maximum of 0.76 mm (0.03 inches) at proximal end 41 (Fig. 3) of side wall 40 to a minimum of 0.51 mm (0.02 inches) at distal end 40a. Each side wall 40 is formed simply by bending flared edges 62 along line 64 upwards with respect to surface 18b until the desired angle with surface 18b (e.g., 90°) is reached. An angle of 90° provides the greatest stiffness, but the angle may alternately be either acute or obtuse as desired.

Each flared edge 62 includes a pair of projections 66, 68 which are used to form tabs 46, 48, respectively. Each tab 46, 48 is formed (after edges 62 have been folded on line 64) by first bending each projection 66, 68 outward with respect to the associated side wall 40 along line 70 until the projection makes an angle of about 90° with side wall 40. Then, projections 66, 68 are bent downward with respect to associated side walls 40 along lines 72 to be approximately parallel thereto (see Fig. 1). Proximal end 58 includes a pair of projections 74 from which tabs 50 are formed simply by bending projections 74 downward 90° along line 76.

Referring also to Figs. 6 and 7, actuator arm 20 has a relatively thick (e.g., about 1.27 mm (0.05 inches)) proximal end 78 and is fabricated from aluminum to reduce its mass while maintaining a high degree of stiffness. This is desirable because, as discussed, in some applications actuator arm 20 is rapidly moved during operation to position head 12 among various disk tracks. Upper surface 80 of the distal end of actuator arm 20 is recessed (for example, by grinding) from upper surface 79 of proximal end 78 to form slot-shaped cavity 82 in actuator arm 20. Cavity 82 extends the entire width of the distal end of actuator arm 20 and is also about as wide as load beam base 24, which cavity 82 receives. Cavity 82 terminates at edge 83 and has a length approximately equal to that of base 24. Cavity 82 is about 0.76 mm (0.03 inches) deep for purposes discussed in detail below.

The distal end of actuator arm 20 thus comprises shelf 84 of reduced thickness (about 0.51 mm (0.02 inches) thick) from proximal end 78 and formed integrally therewith. Mounting and alignment slot 86, approximately 2.54 mm (0.1 inches) wide, is disposed completely through shelf 84 and located at the lateral center thereof (i.e, slot 86 is centered about longitudinal axis 30 of actuator arm 20). Slot 86 opens at distal surface 87 of actuator arm 20 and extends approximately the entire length of shelf 84. Thus, with base 24 of load beam slider arm 14 inserted and laterally centered in cavity 82, portions of alignment and mounting slots 28, 86 of load beam slider arm 14 and actuator arm 20, respectively, are in registry.

Base 24 is secured to actuator arm shelf 84 by threaded clamp 88, which is shown disassembled in Figs. 1 and 6 and partially assembled in Fig. 3. Clamp 88 comprises threaded nut plate 90, bolt 92, and also actuator arm shelf 84. Nut plate 90 includes rectangular stainless steel plate 94, approximately 0.51 mm (0.02 inches) in thickness, having about the same length and width dimensions as base 24. Generally circular throat 96 is disposed at approximately the lateral and longitudinal centers of plate 94 and protrudes about 0.46 mm (0.018 inches) from underside 95 of plate 94. The outer diameter of throat 96 is slightly less than 2.54 mm (0.1 inches), enabling throat 96 to snugly fit within slots 28, 86. Throat 96 (and the portion of plate 94 from which throat 96 protrudes) includes threaded opening 98 for receiving bolt 92.

Bolt 92 is also stainless steel and comprises a thin, hexagonal-shaped, 3.18 mm (1/8 inch) head 100 (for example, 0.51 mm (0.02 inches) thick) and threaded stem 102, approximately 1.52 mm (0.06 inches) long for engaging threaded opening 98 of nut plate 90 from underside 81 of shelf 82.

As shown in Fig. 3, mounting assembly 10 is assembled by first loosly assembling bolt 92 and nut plate 90. Preferrably, stainless steel washer 104 (approximately 3.8 mm (0.15 inches) in diameter and 0.13 mm (0.005 inches) thick) is used with bolt 92 for purposes to be explained. Washer 104 is placed on bolt 92 and stem 102 turned a short distance into threaded portion 98 of nut plate 90. Nut plate 90, bolt 92, and washer 104 are then inserted onto shelf 84 as a unit by sliding nut plate throat 96 into slot 86 in the direction of arrow 106 so that bolt 92 and washer 104 are disposed below shelf 84 and nut plate 90 is located above shelf 84. Because bolt 92 is only slightly threaded into nut plate 90, underside 95 of plate 94 will only loosly engage upper surface 80 of shelf 84 at this stage.

Then, load beam slider arm 14 is inserted on actuator arm 20 by inserting fingers 36 of base 24 between plate 94 and shelf 84, aligning slot 28 with throat 96, and sliding base 24 into actuator arm cavity 82 in the direction of arrow 108. Because slots 28, 86 are disposed at the lateral centers of load beam slider arm 14 and actuator arm 20, respectively, load beam slider arm 14 (and thus head 12) is laterally aligned with actuator arm 20 on longitudinal axis 30 when slot 28 is inserted about throat 96. Load beam slider arm 14 (and hence head 12) is axially aligned on longitudinal axis 30 by the engagement of fingers 36 with edge 83 of cavity 82. Slots 34 minimize the width of proximal surface 32 of base 24 that abuts cavity edge 83 and thus helps in squaring base 24 within cavity 82.

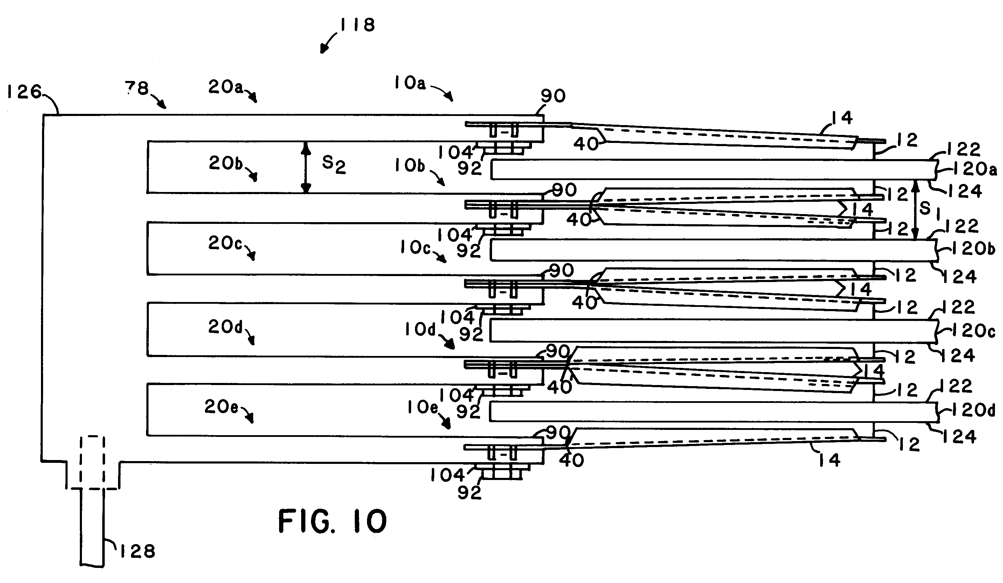

Referring also to Figs. 8 and 9, while holding load beam slider arm 14 in place within cavity 82 (for example by a mounting tool which engages tabs 48) bolt 92 is fully tightened into nut plate 90. As discussed in detail below, in multiple disk drives, multiple actuator arms 20 for the several heads are spaced as narrowly as possible. Thus, circular wrench 110 is used to tighten bolt 92 into nut plate 90. Wrench 110 comprises hardened tool steel and is about 22.9 mm (0.9 inches) in diameter. Wrench 110 is about 1.52 mm (0.06 inches) thick and includes base 112 on which raised shoulder 114 is disposed. 3.18 mm (One-eighth inch) hexagonal-shaped socket 116 is disposed in shoulder 114 and is slightly deeper than the thickness (0.51 mm (0.02 inches)) of bolt head 100. Wrench 110 is operated manually by placing it beneath actuator arm shelf 84, engaging bolt head 100 with socket 116, and turning wrench 110 to finger-tighten bolt 92 into threaded opening 98. The diameter of wrench 110 is larger than the width (10.2 mm (0.4 inches)) of shelf 84, thereby facilitating operation. Washer 104 prevents bolt head 100 from digging into underside 81 of shelf 84 (which would produce metal flakes which might damage the disk drive) and into the sides of slot 86.

With bolt 92 fully tightened into nut plate 90, load beam slider arm base 24 is securely clamped to shelf 84 (i.e., between underside 95 of plate 94 and shelf upper surface 80). Thus, clamp 88 overcomes the torque exerted on load beam slider arm 14 during operation (i.e., the forces exerted by the disk rotation- induced air stream and by rapid repositioning of head 12 by the actuator mechanism), thereby securely maintaining the lateral and axial alignment of head 12 and load beam slider arm 14 on longitudinal axis 30. Electrical lead 52 is restrained between one of tabs 50 and nut plate 90 simply by bending tab 50 toward plate 94 with lead 52 disposed in channel 47.

Load beam slider arm 14 is easily removed from actuator arm 20 for replacement or repair simply by engaging bolt head 100 with wrench 110 and slightly backing off (i.e., loosening) bolt 92 just enough (e.g., 1/4 to 1/2 of a turn) to allow base 24 to be slid outward (i.e., in the opposite direction from arrow 108) from between nut plate 90 and shelf 84, and removing beam slider arm 14 from cavity 82 while keeping bolt 92 attached to nut plate 90 and maintaining throat 96 within shelf slot 86. That is, nut plate 90, bolt 92 and washer 104 remain assembled and attached to shelf 84. Another load beam slider arm 14 (carrying a new or repaired head 12) is then secured to actuator arm 20 following the above-discussed procedure.

Referring to Fig. 10, a section of a multiple disk drive 118 comprising four magnetic disks 120a-120d and five mounting assemblies 10a-10e is shown. Mounting assembly 10a is identical to mounting assembly 10 of Figs. 1-7, as is mounting assembly 10e, except that its load beam slider arm 14 faces in the opposite direction than that shown in Figs. 1-7 (i.e., upward rather than downward). Thus, head 12 of mounting assembly 10e communicates with lower surface 124 of disk 120d, while head 12 of mounting assembly 10a communicates with upper surface 122 of disk 120a. Mounting assemblies 10b, 10c, 10d each include a pair of load beam slider arms 14, disposed back-to-back and spot welded together, carrying heads 12 for communicating with upper and lower surfaces 122, 124 of a pair of the disks. Bend region 26 (Fig. 1) of each load beam slider arm 14 is adjusted to place each head 12 in contact with its associated disk surface 122, 124 when disks 120a-120d are at rest.

In each mounting assembly 10a-10e, base (or bases) 24 of load beam slider arm (or arms) 14 is disposed in cavity 82 (Fig. 3) of a corresponding actuator arm 20a-20e. Bases 24 are releasably clamped in place by the engagement of bolt 92 with nut plate 90 in the manner described in detail above.

Preferably, actuator arms 20a-20e are fabricated as a unitary structure with proximal ends 78 thereof being integrally formed with base 126, which is rigidly connected to drive shaft 128 of a servomotor or stepping motor. Thus, as shaft 128 rotates, actuator arms 20a-20e correspondingly move heads 12 in unison across upper and lower surfaces 122, 124 of disks 120a-120d.

Adjacent disks 120a-120d (e.g., disks 120a, 120b) are separated by S₁, which is a function of the profile (i.e., height) of the pair of load beam slider arms 14 disposed therebetween. With the low profile (i.e., approximately 1.18 mm (0.044 inches) total height) of load beam slider arms 14, spacing S₁ between lower surface 124 of disk 120a and disk 120b upper surface 122 is substantially reduced (for example, to 3.18 mm (0.125 inches)). This reduced spacing still provides sufficient room for each one of the pair of load beam slider arms 14 to be lifted off respective disk surfaces 122, 124 during operation without interference from the other. With disk spacing S₁ reduced, multiple disk drive 118 can be made smaller. Alternately stated, more disks can be accommodated in the same amount of space within disk drive 118.

Spacing S₂ between adjacent actuator arms 20a-20e is relatively small, for example, approximately 5.1 mm (0.2 inches). Thus, slots 86 (Fig. 1) in shelf 84 of each actuator arm 20a-20e greatly facilitate the assembly of mounting assemblies 10a-10e by allowing nut plate 90, bolt 92, and associated washer 104 of each clamp 88 to be loosly preassembled and slid onto shelf 84 as a unit. While slots 86 could alternately be circular holes, this would require that each bolt 92 be passed through its associated shelf 84 before being inserted into nut plate 90, which would be difficult, given the small spacing, S₂, between adjacent actuator arms 20a-20e.

During operation of disk drive 118, if a magnetic head 12 (for example, one of the pair of heads secured to actuator arm 20c) fails, the head is easily replaced by removing head 12 and its associated load beam slider arm 14 as a unit from actuator arm 20c in the following manner. Base 126 is rotated so that actuator arms 20a-20e are pivoted to the peripheral edges of disks 120a-120d (after a conventional pivot stop has been removed), and a comb (not shown) is inserted between heads 12 disposed against upper and lower surfaces 122, 124 of disks 120a-120d. If the comb is not used, heads 12 will clap together (due to the resiliency of load beam slider arms 14) and be damaged when the assembly is pivoted away from the peripheral edges of the disks.

Defective head 12 is replaced simply by inserting wrench 110 (Figs. 8, 9) beneath actuator arm 20c, engaging bolt head 100 (Fig. 7), and slightly loosening bolt 92 (for example, by 1/4 to 1/2 of a turn). Wrench 110 easily fits between actuator arms 20c, 20d and operates easily to loosen bolt 92. Then, the load beam slider arm carrying the defective head is pulled out of clamp 88 (i.e., slid from between underside 95 of nut plate 90 and shelf surface 80 in the opposite direction of arrow 108 in Fig. 3) in the manner discussed above (after removing the electrical lead of head 12 from its connection in disk drive 118). The other load beam slider arm 14 mounted on actuator arm 20c is maintained between plate 94 and shelf 84. Then, a new head 12 and load beam slider arm 14 are inserted as a unit and clamped onto actuator arm 20c in the manner described above, again using wrench 110. The electrical lead of the new head 12 is then connected in disk drive 118. The multi-arm assembly is pivoted to re-engage heads 12 with surfaces 122, 124 of disks 120a-120d, and the comb is removed.

Other embodiments are within the scope of the following claims. For example, stiffeners 38 could alternatively be separate members attached (e.g., by spot welding) to surface 18b.

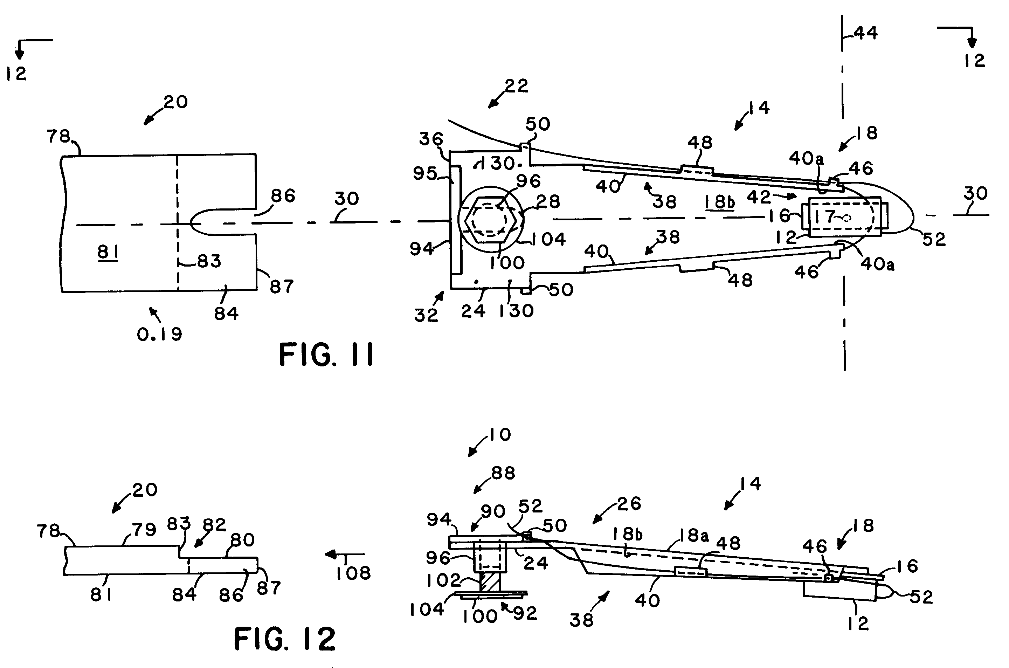

Additionally, referring to Figs. 11 and 12, threaded clamp 88 could alternatively be permanently attached to load beam base 24, such as by attaching underside 95 of nut plate 94 to the upper surface of load beam base 24 with a series of spot welds 130. Throat 96 protrudes through slot 28 (which could alternatively be a circular hole) in base 24, and threadably receives bolt 100. Mounting assembly 10 is assembled simply by sliding load beam slider arm 14 and partially assembled clamp 88 as a unit onto actuator arm shelf 84 in the direction of arrow 108, with throat 96 being inserted in actuator arm slot 86. Thus, nut plate 94 and base 24 are inserted as a unit into actuator arm cavity 92. Then, bolt 92 is tightened (preferably with wrench 110) in the manner discussed above. Disassembly follows the reverse of these steps.

The arrangement of Figs. 11 and 12 reduces the number of parts that need be inserted onto actuator arm 20. That is, rather than initially inserting clamp 88 on shelf 84 and then sliding load beam slider arm 14 onto the shelf, load beam slider arm 14 and clamp 88 are inserted onto actuator arm 20 in one step.

## Claims

1. An arm (14) for mounting a head (12) in a disk drive, comprising:
a first member (14); and
stiffening means (38) for stiffening said first member,
said first member having a distal region (18) for supporting the head (12) on a mounting surface (18b) thereof and a proximal region (22) having an end adapted to be mounted on a support in the disk drive, said first member (14) being resilient between said proximal region and said distal region to urge the head against a surface of the disk when the disk is at rest;
a slider (16) disposed on said mounting surface (18b) in said distal region (18) for carrying said head (12), said slider being adapted to slide on a stream of air when the disk is rotating to lift the head away from the disk surface,
the arm characterized in that:
said first member (14) comprises a single, elongated piece of material; and
said stiffening means includes a second member (38) which is angularly disposed with respect to said mounting surface (18b) on the same side of said arm (14) as said head, such that said second member (38) is disposed alongside at least a portion of said slider and extends along said single piece of material (14) toward said proximal region (22).

2. The arm of claim 1 wherein said first member (14) comprises a blade including said mounting surface (18b), and said second member (38) comprises a wall (40) integrally formed with said blade and disposed at an angle of approximately 90° with respect to said mounting surface.

3. The arm of claim 1 wherein a portion (46,47,48) of said second member (38) is adapted to restrain an electrical lead of said head against said second member.

4. The arm of claim 1 wherein a portion (48) of said second member (38) is adapted to be engaged for mounting and demounting said arm (14) in said disk drive.

5. The arm of claim 1 wherein a portion of said second member (38) comprises a tab (48) forming a channel (47) with said second member (38) for receiving an electrical lead (52) of said head, said tab (48) having at least one surface adapted to be engaged for mounting and demounting said arm (10) in said disk drive.

6. The arm of claim 1 further comprising a base (24) proximally disposed with respect to said first member (14) for mounting said arm on an actuator (20) in the disk drive.

7. The arm of claim 6 wherein said base (24) includes a tab (50) forming a channel with said actuator (20) for receiving said an electrical lead of said head.

8. The arm of claim 1 wherein said first member (14) and second member (38) are integrally formed.

9. The arm of claim 1 wherein said stiffening means (38) includes a further member, said second member and said further member together forming a pair of side regions angularly disposed with respect to said mounting surface (18b) to straddle at least a portion of said slider (16), said side regions extending longitudinally along said single piece of material (14) proximally to said distal end region (18).

10. The arm of claim 9 wherein said distal region (18) comprises a blade including said mounting surface (18b), said head being adapted to be disposed on a gimbal (17) on said mounting surface, said pair of side regions (38) each comprising a wall (40), said head being disposed adjacent at least a portion (40a) of each said walls.

11. The arm of claim 10 wherein said wall portions (40a) are spaced sufficiently to allow said head (12) to move on said gimbal (17) without contacting either wall portion.

12. The arm of claim 10 wherein said wall portions (40a) are integrally formed with said blade.

13. The arm of claim 9 wherein said pair of side regions (40a) is angularly disposed with respect to said mounting surface (18b) to form a channel (42) with said mounting surface within which at least a portion of said slider is disposed, said side regions (40) extending continuously from said distal region (18) to said proximal region (22).

14. The arm of claim 13 wherein said head (12) is mounted on a gimbal (17) on said mounting surface (18b), said channel (42) being sufficiently wide to allow said head (12) to move on the gimbal without contacting said side regions.

15. The arm of claim 13 wherein a portion (46) of at least one of said pair of side regions (40) is adapted to restrain an electrical lead (52) of said head (12) against said side region.

16. The arm of claim 13 wherein a portion (48) of at least one of said pair of side regions (40) is adapted to be engaged for mounting and demounting said arm in said disk drive.

17. A disk drive comprising:
at least one disk (120);
a head (12) for communicating with said disk; and
an arm (14) according to claim 13 for mounting said head in said disk drive.

18. The disk drive of claim 17 including a pair of spaced disks (120a,120b) and a pair of said arms (14), said pair of arms being mounted back-to-back on an actuator (20b) in said disk drive, with the head (12) carried by a first one of said pair of arms communicating with a surface (124) of a first one (120a) of the pair of spaced disks and the head (12) carried by a second one of said pair of arms communicating with a surface (122) of a second one (120b) of said pair of disks.

19. The disk drive of claim 17 wherein said head is disposed on a gimbal (17) on said mounting surface (18b), said mounting surface having a width in said channel (42) selected to stiffen said arm in a direction perpendicular to a longitudinal axis of said arm and to allow said head to move on the gimbal without contacting said pair of side regions.

20. The disk drive of claim 17 wherein said arm comprises a base region (24), proximally disposed with respect to said distal region (18), and a pair of side regions (40), for mounting said arm on an actuator (20).

21. The disk drive of claim 20 wherein said actuator has a longitudinal axis, said base region (24) and actuator (20) comprising means (28,86,92,96) for aligning said arm and head laterally along said longitudinal axis.

22. The disk drive of claim 21 wherein said base region (24) and actuator (20) comprise means (34,36,83) for aligning said arm and head axially with respect to said longitudinal axis.

23. The disk drive of claim 20 wherein said base region (24), distal region (18) and side regions (40) are integrally formed.

24. A disk drive comprising:
a pair of disks (120a,120b) having spaced, opposing surfaces (124,122),
a pair of heads (12) of the kind for communicating with the spaced, opposing surfaces of said pair of disks, and
a pair of arms (14), each according to claim 13, for mounting said pair of heads in said disk drive, each one of said pair of arms adapted to urge a respective head against a respective one of said opposing surfaces of said disks when the disk is at rest, said first member of each arm having a second surface (18a) opposite to said mounting surface (18b), the second surfaces of said pair of arms opposing each other; and
wherein said side regions (40) of said pair of arms allow the second surfaces (18a) of said pair of arms to become closely disposed with respect to one another without interference from said side regions when said sliders lift said heads.

## Patentansprüche

1. Arm (14) zur Befestigung eines Kopfs (12) in einem Plattenlaufwerk, enthaltend:
einen ersten Bestandteil (14); und
eine Versteifungseinrichtung (38) zum Versteifen des ersten Bestandteils,
wobei der erste Bestandteil einen Fernbereich (18), um den Kopf (12) auf einer Befestigungsfläche (18b) davon zu tragen, und einen Nahbereich (22) aufweist, der ein Ende aufweist, das dafür eingerichtet ist, auf einem Träger in dem Plattenlaufwerk befestigt zu werden, und wobei der erste Bestandteil (14) zwischen dem Nahbereich und dem Fernbereich federnd ist, um den Kopf gegen eine Oberfläche der Platte zu treiben, wenn die Platte in Ruhe ist;
einen Gleiter (16), der auf der Befestigungsfläche (18b) in dem Fernbereich (18) angeordnet ist, um den Kopf (12) zu halten, wobei der Gleiter dafür eingerichtet ist, auf einem Luftstrom zu gleiten, wenn sich die Platte dreht, um den Kopf von der Plattenoberfläche abzuheben,
wobei der Arm dadurch gekennzeichnet ist, daß:
der erste Bestandteil (14) ein einziges, langgestrecktes Materialstück aufweist und
die Versteifungseinrichtung einen zweiten Bestandteil (38) umfaßt, der in bezug auf die Befestigungsfläche (18b) auf der gleichen Seite des Arms (14) wie der Kopf winklig angeordnet ist, so daß der zweite Bestandteil (38) Seite an Seite wenigstens eines Abschnitts des Gleiters angeordnet ist und sich längs des einzigen Materialstücks (14) in Richtung auf den Nahbereich (22) erstreckt.

2. Arm nach Anspruch 1, wobei der erste Bestandteil (14) ein Blatt aufweist, das die Befestigungsfläche (18b) enthält, und wobei der zweite Bestandteil (38) eine Wand (40) aufweist, die einstückig mit dem Blatt gebildet ist und die in einem Winkel von ungefähr 90° in bezug auf die Befestigungsfläche angeordnet ist.

3. Arm nach Anspruch 1, wobei ein Abschnitt (46, 47, 48) des zweiten Bestandteils (38) dafür eingerichtet ist, eine elektrische Leitung des Kopfs gegen den zweiten Bestandteil zurückzuhalten.

4. Arm nach Anspruch 1, wobei ein Abschnitt (48) des zweiten Bestandteils (38) dafür eingerichtet ist, daß zur Montage und Demontage des Arms (14) in dem Plattenlaufwerk daran angegriffen wird.

5. Arm nach Anspruch 1, wobei ein Abschnitt des zweiten Bestandteils (38) einen Lappen (48) aufweist, der mit dem zweiten Bestandteil (38) einen Kanal (47) zur Aufnahme einer elektrischen Leitung (52) des Kopfs bildet, wobei der Lappen (48) wenigstens eine Oberfläche hat, die dafür eingerichtet ist, daß zur Montage und Demontage des Arms (14) in dem Plattenlaufwerk daran angegriffen wird.

6. Arm nach Anspruch 1, der weiterhin eine Basis (24) aufweist, die in bezug auf den ersten Bestandteil (14) in der Nähe angeordnet ist, zur Befestigung des Arms auf einem Stellglied (20) in dem Plattenlaufwerk.

7. Arm nach Anspruch 6, wobei die Basis (24) einen Lappen (50) enthält, der mit dem Stellglied (20) einen Kanal zur Aufnahme einer elektrischen Leitung des Kopfs bildet.

8. Arm nach Anspruch 1, wobei der erste Bestandteil (14) und der zweite Bestandteil (38) einstückig gebildet sind.

9. Arm nach Anspruch 1, wobei die Versteifungseinrichtung (38) einen weiteren Bestandteil enthält, wobei der zweite Bestandteil und der weitere Bestandteil zusammen ein Paar von Seitenbereichen bilden, die in bezug auf die Befestigungsfläche (18b) winklig angeordnet sind, um wenigstens einen Abschnitt des Gleiters (16) zu überspannen, wobei sich die Seitenbereiche longitudinal längs des einzigen Materialstücks (14) in der Nähe des entfernten Endbereichs (18) erstrecken.

10. Arm nach Anspruch 9, wobei der Fernbereich (18) ein Blatt aufweist, das die Befestigungsfläche (18b) enthält, wobei der Kopf dafür eingerichtet ist, auf einem Kardanrahmen (17) auf der Befestigungsfläche angeordnet zu werden, wobei das Paar von Seitenbereichen (38) je eine Wand (40) aufweist und wobei der Kopf angrenzend an wenigstens einen Abschnitt (40a) jeder der Wände angeordnet ist.

11. Arm nach Anspruch 10, wobei die Wandabschnitte (40a) einen ausreichenden Abstand haben, um es dem Kopf (12) zu ermöglichen, sich auf dem Kardanrahmen (17) zu bewegen, ohne einen Wandabschnitt zu berühren.

12. Arm nach Anspruch 10, wobei die Wandabschnitte (40a) einstückig mit dem Blatt gebildet sind.

13. Arm nach Anspruch 9, wobei das Paar von Seitenbereichen (40a) in bezug auf die Befestigungsfläche (18b) winklig angeordnet ist, um mit der Befestigungsfläche einen Kanal (42) zu bilden, innerhalb dessen wenigstens ein Abschnitt des Gleiters angeordnet ist, wobei sich die Seitenbereiche (40) kontinuierlich von dem Fernbereich (18) zu dem Nahbereich (22) erstrecken.

14. Arm nach Anspruch 13, wobei der Kopf (12) auf einem Kardanrahmen (17) auf der Befestigungsfläche (18b) befestigt ist und wobei der Kanal (42) ausreichend breit ist, um es dem Kopf (12) zu ermöglichen, sich auf dem Kardanrahmen zu bewegen, ohne die Seitenbereiche zu berühren.

15. Arm nach Anspruch 13, wobei ein Abschnitt (46) wenigstens eines Seitenbereichs des Paares von Seitenbereichen (40) dafür eingerichtet ist, eine elektrische Leitung (52) des Kopfs (12) gegen den Seitenbereich zurückzuhalten.

16. Arm nach Anspruch 13, wobei ein Abschnitt (48) wenigstens eines Seitenbereichs des Paares von Seitenbereichen (40) dafür eingerichtet ist, daß zur Montage und Demontage des Arms in dem Plattenlaufwerk daran angegriffen wird.

17. Plattenlaufwerk, enthaltend:
wenigstens eine Platte (120);
einen Kopf (12) für eine Kommunikation mit der Platte; und
einen Arm (14) gemäß Anspruch 13, zur Befestigung des Kopfs in dem Plattenlaufwerk.

18. Plattenlaufwerk nach Anspruch 17, enthaltend ein Paar von im Abstand angeordneten Platten (120a, 120b) und ein Paar der Arme (14), wobei das Armpaar Rücken an Rücken auf einem Stellglied (20b) in dem Plattenlaufwerk angeordnet ist, wobei der von einem ersten Arm des Armpaares gehaltene Kopf (12) mit einer Oberfläche (124) einer ersten Platte (120a) des Paares von im Abstand angeordneten Platten kommuniziert und der von einem zweiten Arm des Armpaares gehaltene Kopf (12) mit einer Oberfläche (122) einer zweiten Platte (120b) des Plattenpaares kommuniziert.

19. Plattenlaufwerk nach Anspruch 17, wobei der Kopf auf einem Kardanrahmen (17) auf der Befestigungsfläche (18b) angeordnet ist, wobei die Befestigungsfläche eine Breite in dem Kanal (42) hat, die so gewählt ist, daß der Arm in einer zu einer Längsachse des Arms senkrechten Richtung versteift wird und es dem Kopf ermöglicht wird, sich auf dem Kardanrahmen zu bewegen, ohne das Paar von Seitenbereichen zu berühren.

20. Plattenlaufwerk nach Anspruch 17, wobei der Arm einen Basisbereich (24), der in bezug auf den Fernbereich (18) in der Nähe angeordnet ist, und ein Paar von Seitenbereichen (40) aufweist, zur Befestigung des Arms auf einem Stellglied (20).

21. Plattenlaufwerk nach Anspruch 20, wobei das Stellglied eine Längsachse hat und der Basisbereich (24) und das Stellglied (20) eine Einrichtung (28, 86, 92, 96) zum seitlichen Ausrichten des Arms und des Kopfs längs der Längsachse aufweisen.

22. Plattenlaufwerk nach Anspruch 21, wobei der Basisbereich (24) und das Stellglied (20) eine Einrichtung (34, 36, 83) zum axialen Ausrichten des Arms und des Kopfs in bezug auf die Längsachse aufweisen.

23. Plattenlaufwerk nach Anspruch 20, wobei der Basisbereich (24), der Fernbereich (18) und die Seitenbereiche (40) einstückig gebildet sind.

24. Plattenlaufwerk, enthaltend:
ein Paar von Platten (120a, 120b) mit im Abstand angeordneten, entgegengesetzten Oberflächen (124, 122),
ein Paar von Köpfen (12) der Art für eine Kommunikation mit den im Abstand angeordneten, entgegengesetzten Oberflächen des Plattenpaares, und
ein Paar von Armen (14), jeder gemäß Anspruch 13, zur Befestigung des Paares von Köpfen in dem Plattenlaufwerk, wobei jeder Arm des Armpaares dafür eingerichtet ist, einen jeweiligen Kopf gegen eine jeweilige Oberfläche der entgegengesetzten Oberflächen der Platten zu treiben, wenn die Platte in Ruhe ist, und wobei der erste Bestandteil jedes Arms eine zweite Oberfläche (18a) hat, die der Befestigungsfläche (18b) entgegengesetzt ist, wobei die zweiten Oberflächen des Armpaares einander gegenüberliegen; und
wobei die Seitenbereiche (40) des Paares von Armen es den zweiten Oberflächen (18a) des Armpaares erlauben, eng in bezug zueinander angeordnet zu werden, ohne von den Seitenbereichen beeinflußt zu werden, wenn die Gleiter die Köpfe anheben.

## Revendications

1. Bras (14) destiné à permettre le montage d'une tête (12) dans une unité de disques, comprenant :
un premier organe (14); et
des moyens raidisseurs (38) destinés rigidifier ledit premier organe,
ledit premier organe comportant une zone distale (18) destinée à supporter la tête (12) sur sa surface de montage (18b) et une zone proximale (22) pourvue d'une extrémité adaptée pour être montée sur un support prévu dans l'unité de disques, ledit premier organe (14) étant élastique entre ladite zone proximale et ladite zone distale pour solliciter la tête contre une face du disque lorsque celui-ci est au repos;
un organe coulissant (16) disposé sur ladite surface de montage (18b) dans ladite zone distale (18) pour supporter ladite tête (12), ledit organe coulissant étant adapté pour coulisser sur un jet d'air lorsque le disque tourne, pour lever la tête à distance de la face du disque,
le bras étant caractérisé en ce que :
ledit premier organe (14) est constitué d'une pièce de matériau allongée unique; et
lesdits moyens raidisseurs comprennent un second organe (38) disposé angulairement par rapport à ladite surface de montage (18b), du même côté dudit bras (14) que ladite tête, de manière à être placé le long d'une partie au moins dudit organe coulissant, et s'étendent le long de ladite pièce de matériau unique (14) en direction de ladite zone proximale (22).

2. Bras selon la revendication 1, dans lequel ledit premier organe (14) comprend une lame comportant ladite surface de montage (18b), et ledit second organe (38) comprend une paroi (40) formée d'une seule pièce avec ladite lame et disposée suivant un angle de 90° approximativement par rapport à ladite surface de montage.

3. Bras selon la revendication 1, dans lequel une partie (46, 47, 48) dudit second organe (38) est adaptée pour retenir un conducteur électrique de ladite tête contre ledit second organe.

4. Bras selon la revendication 1, dans lequel une partie (48) dudit second organe (38) est adaptée pour être mise en prise en vue du montage et du démontage dudit bras (14) dans ladite unité de disques.

5. Bras selon la revendication 1, dans lequel une partie dudit second organe (38) comporte une patte (48) qui définit avec ledit second organe (38) une gorge (47) destinée à recevoir un conducteur électrique (52) de ladite tête, ladite patte (48) ayant au moins une surface adaptée pour être mise en prise en vue du montage et du démontage dudit bras (10) dans ladite unité de disques.

6. Bras selon la revendication 1, comprenant également une base (24) disposée d'une manière rapprochée par rapport audit premier organe (14) pour permettre le montage dudit bras sur un organe d'actionnement (20) dans l'unité de disques.

7. Bras selon la revendication 6, dans lequel ladite base (24) comprend une patte (50) qui définit avec ledit organe d'actionnement (20) une gorge destinée à recevoir ledit conducteur électrique de ladite tête.

8. Bras selon la revendication 1, dans lequel ledit premier organe (14) et ledit second organe (38) sont formés d'une seule pièce.

9. Bras selon la revendication 1, dans lequel lesdits moyens raidisseurs (38) comprennent un troisième organe, ledit second organe et ledit troisième organe définissant ensemble deux zones latérales disposées angulairement par rapport à ladite surface de montage (18b) pour chevaucher au moins une partie dudit organe coulissant (16), lesdites zones latérales s'étendant longitudinalement le long de ladite pièce de matériau unique (14) à proximité de ladite zone d'extrémité distale (18).

10. Bras selon la revendication 9, dans lequel ladite zone distale (18) comprend une lame qui comporte ladite surface de montage (18b), ladite tête étant adaptée pour être disposée sur un cardan (17) prévu sur ladite surface de montage, lesdites deux zones latérales (38) comportant chacune une paroi (40), ladite tête étant disposée à proximité d'une partie (40a) au moins de chacune desdites parois.

11. Bras selon la revendication 10, dans lequel lesdites parties de parois (40a) sont suffisamment espacées pour permettre à ladite tête (12) de se déplacer sur ledit cardan (17) sans venir en contact avec l'une ou l'autre des parties de parois.

12. Bras selon la revendication 10, dans lequel lesdites parties de parois (40a) sont formées d'une seule pièce avec ladite lame.

13. Bras selon la revendication 9, dans lequel lesdites deux zones latérales (40a) sont disposées angulairement par rapport à ladite surface de montage (18b) afin de définir avec celle-ci une gorge (42) à l'intérieur de laquelle est disposée une partie au moins dudit organe coulissant, lesdites zones latérales (40) s'étendant d'une manière continue de ladite zone distale (18) à ladite zone proximale (22).

14. Bras selon la revendication 13, dans lequel ladite tête (12) est montée sur un cardan (17) prévu sur ladite surface de montage (18b), ladite gorge (42) étant suffisamment large pour permettre à ladite tête (12) de se déplacer sur le cardan sans venir en contact avec lesdites zones latérales.

15. Bras selon la revendication 13, dans lequel une partie (46) de l'une au moins desdites deux zones latérales (40) est adaptée pour retenir un conducteur électrique (52) de ladite tête (12) contre ladite zone latérale.

16. Bras selon la revendication 13, dans lequel une partie (48) de l'une au moins desdites deux zones latérales (40) est adaptée pour être mise en prise en vue du montage et du démontage dudit bras dans ladite unité de disques.

17. Unité de disques comprenant :
au moins un disque (120);
une tête (12) destinée à communiquer avec ledit disque; et
un bras (14) selon la revendication 13, destiné à permettre le montage de ladite tête dans ladite unité de disques.

18. Unité de disques selon la revendication 17, comprenant deux disques espacés (120a, 120b) et deux bras (14), lesdits deux bras étant montés dos à dos sur un organe d'actionnement (20b) prévu dans ladite unité de disques, la tête (12) portée par un premier desdits deux bras communiquant avec une face (124) d'un premier (120a) des deux disques espacés, tandis que la tête (12) portée par un second desdits deux bras communique avec une face (122) d'un second (120b) desdits deux disques.

19. Unité de disques selon la revendication 17, dans laquelle ladite tête est disposée sur un cardan (17) prévu sur ladite surface de montage (18b), ladite surface de montage ayant une largeur dans ladite gorge (42), sélectionnée pour rigidifier ledit bras dans une direction perpendiculaire à un axe longitudinal dudit bras et pour permettre à ladite tête de se déplacer sur le cardan sans venir en contact avec lesdites deux zones latérales.

20. Unité de disques selon la revendication 17, dans laquelle ledit bras comporte une zone de base (24) disposée d'une manière rapprochée par rapport à ladite zone distale (18), et deux zones latérales (40) destinées à permettre le montage dudit bras sur un organe d'actionnement (20).

21. Unité de disques selon la revendication 20, dans laquelle ledit organe d'actionnement possède un axe longitudinal, ladite zone de base (24) et ledit organe d'actionnement (20) comportant des moyens (28, 86, 92, 96) destinés à aligner ledit bras et ladite tête latéralement le long dudit axe longitudinal.

22. Unité de disques selon la revendication 21, dans laquelle ladite zone de base (24) et ledit organe d'actionnement (20) comportent des moyens (34, 36, 83) destinés à aligner ledit bras et ladite tête axialement par rapport audit axe longitudinal.

23. Unité de disques selon la revendication 20, dans laquelle ladite zone de base (24), ladite zone distale (18) et lesdites zones latérales (40) sont formées d'une seule pièce.

24. Unité de disques comportant :
deux disques (120a, 120b) qui présentent des faces opposées espacées (124, 122),
deux têtes (12) du type pouvant communiquer avec les faces opposées espacées desdits deux disques, et
deux bras (14) respectivement selon la revendication 13, destinés à permettre le montage desdites deux têtes dans ladite unité de disques, chacun desdits deux bras étant adapté pour solliciter une tête correspondante contre une face correspondante desdites faces opposées desdits disques lorsque le disque est au repos, ledit premier organe de chaque bras présentant une seconde surface (18a) en face de ladite surface de montage (18b), les secondes surfaces desdits deux bras se faisant face mutuellement; et
dans lequel lesdites zones latérales (40) desdits deux bras permettent aux secondes surfaces (18a) desdits deux bras d'être disposées d'une manière rapprochée l'une par rapport à l'autre sans interférence de la part desdites zones latérales lorsque lesdits organes coulissants soulèvent lesdites têtes.
